# EUROPEAN PATENT SPECIFICATION

(11) **EP 1 275 624 B1**
(45) Date of publication and mention of the grant of the patent: **15.08.2007**
(21) Application number: 02014235.2
(22) Date of filing: 26.06.2002
(51) Int. Cl.: C03C 17/00, C03C 17/42, B29D 11/00

(54) **Antifogging product, inorganic hydrophilic hard layer forming material and process for producing antifogging lens**
Beschlagungsresistente transparente Artikel, Stoffe, die eine hydrophile anorganische Schicht hoher Härte bilden und Verfahren zur Herstellung einer beschlagungsarmen Linse
Produit anti-buée, matériau formant un revêtement dur inorganique hydrophile et procédé pour produire une lentille anti-buée

(30) Priority: 29.06.2001 JP 2001199366; 29.06.2001 JP 2001199367; 29.06.2001 JP 2001199368; 17.09.2001 JP 2001282176; 09.11.2001 JP 2001345149
(43) Date of publication of application: 15.01.2003
(73) Proprietor: Crystal Systems Inc., Kitakoma-gun, Yamanashi (JP); Sato, Koji, Kofu-shi, Yamanashi (JP); Shindo, Isamu, Kitakoma-gun, Yamanashi (JP)
(72) Inventor: Shindo, Isamu, Kitakoma-gun, Yamanashi (JP); Sato, Koji, Kofu-shi Yamanashi (JP)
(74) Representative: Kador & Partner

(56) References cited:
- EP-A- 0 924 164
- US-A- 5 869 187
- PATENT ABSTRACTS OF JAPAN vol. 2000, no. 12, 3 January 2001 (2001-01-03) & JP 2000 262367 A (CENTRAL GLASS CO LTD), 26 September 2000 (2000-09-26)

## Description

### FIELD OF THE INVENTION

The present invention relates to an antifogging product and an antifogging lens forming an inorganic hydrophilic hard layer as a surface layer having a high hydrophilic property with maintaining a high mechanical strength on a transparent base material, and to an inorganic hydrophilic hard layer forming material to be used for forming the layer.

### BACKGROUND OF THE INVENTION

A glass lens usually becomes cloudy if it is put on in bathing and at a warm meal, and therefore, the demand for an antifogging eye-glass lens which prevents clouding is still high. Antifogging glasses, with various ingenuities have been developed, and a part of them have appeared on the market. However, because the problems such as those lasses being easily scratched or the antifogging effect not lasting long have not been solved, actually conventional eye-glass lens products for which antifogging properties have been advocated are hardly accepted by the consumer.

As an example relating to the method of manufacturing an antifogging eye-glass lens, there is known a method of making an eye-glass lens to be antifogging by means of the super-hydrophilicity based on the so-called photocatalyst effect of anatase form titanium dioxide, as described in WO96/29375. This method uses the photocatalyst activity caused when anatase form titanium dioxide absorbs ultraviolet rays in the vicinity of 360 nm in wavelength. However, the above-mentioned method has not been put to practical use for the reasons that the irradiation of ultraviolet rays with high energy has to be continued and scratches are easily formed on the surface by the operations of wiping off and others due to the softness of the titanium dioxide.

Moreover, there is another method of applying a surfactant on a lens and the like by the use of a spray and others to give the lens and the like antifogging properties. According to this method, the surfaces of a lens and the like can be temporarily made to be hydrophilic by the atomized surfactant to obtain the antifogging effect. However, because a surfactant revealing the antifogging effect dissolves in water, the continuous effect of the antifogging cannot be expected in this method for the reasons that the effect disappears gradually when getting wet with water and others. For this, users, who adopt this method, are extremely limited, and it is not being accepted by the consuming public.

In addition to this, there is known a method in which a hygroscopic polymer is coated on a base material to make it difficult to form water droplets on the surface. However, this method is also not accepted because the coated surface has a defect that it is easily damaged due to the low mechanical strength of the hygroscopic polymer.

Further, as a method for making base materials, such as a lens and a plastic plate, to be antifogging, there is also known a method in which the surface is made porous to make it difficult to be cloudy. However, in this method, some problems are pointed out that the abrasion resistance of the surface is decreased because of being made porous and that once the surface becomes dirty, it is difficult to remove the dirt. As a result, this method is also not accepted.

Glass materials have been mainly used as highly transparent base materials to be used for eye-glass lenses and the like. However, since the glass materials may hurt eyes when they are broken, plastic base materials, such as acrylic resin base materials and polycarbonate base materials, which are higher in safety and can be lightened, have come to be used widely. Because the toughness of such a plastic base material is higher, while its hardness is lower than that of the glass materials, in order to use these for eye-glasses, in addition to revealing the effect of antifogging as mentioned above, it is demanded to make the surface have high mechanical strength and high abrasion resistance by hardening the surface. Under these circumstances, a transparent material, which does not become cloudy and is not easily damaged while it is normally used as in eye-glass lenses, and a technology for realizing this demand have been waited for a long time.

EP-A-0 924 164 discloses an antifogging material comprising an inorganic layer predominantly of TiO₂.

### OBJECT OF THE INVENTION

The present invention is aimed to provide an antifogging product capable of maintaining a high antifogging effect for a long period of time and having a high surface hardness, and a transparent plastic base material such as a glass lens using the same and a process for producing the material. As a result, the antifogging product and the transparent base material used in various fields such as lenses, goggles, reflectors, window materials and others can be used without being cloudy.

### SUMMARY OF THE INVENTION

The present invention has realized a completely new technical idea which reveals an antifogging property and sustains antifogging effect for a long period of time by forming a thin film into a shape having concave portions, which film comprises an oxide composite having a highly hydrophilic and excellent mechanical strength, on the surface of a transparent base material of a plastic lens and the like, and by continuously expanding a hydrophilic substance such as a surfactant contained in the film, to prevent moisture adhering on the surface from becoming drops of water. As a result, it became possible for the first time to produce a plastic lens which is hardly damaged and can maintain its antifogging property for a long period of time.

As a process for producing a thin film, it is desirable to form a film at a low temperature as near the room temperature as possible because there is a limitation that the plastic material as a base material should not be deformed. In the present invention, as a method in which a film can be formed at low temperatures, it has been found that at least part of fluorine atoms in a plurality of fluorometallic acid salts containing e.g. hexafluorotitanate is eliminated with a reactant in an aqueous solution to deposit a composite inorganic oxide containing e.g. titanium dioxide as well oxides of Si and Zr and to form an inorganic hydrophilic hard layer. By this method, an oxide thin film can be formed at a temperature near the room temperature, so that the film is high in quality and is excellent in mechanical strength. However, when a thin film is formed according to this method, e.g. titanium dioxide to be deposited may have a so-called photocatalyst effect. In such a case, a phenomenon that a surfactant required for the antifogging is decomposed by this photocatalyst effect may undesirably happen. Therefore, it is preferable that a component capable of controlling the photocatalyst effect caused by titanium dioxide and a component capable of maintaining higher mechanical strength of a thin film are contained in necessary amounts, respectively. The present inventors have found that this purpose can be achieved by using an oxide of silicon and an oxide of zirconium and optionally others.

The antifogging product of the present invention is defined in claim 1. Therefore, the antifogging property can be maintained for a long period of time by constantly supplying the surfactant to the surface.

For forming a thin film having such an construction and composition and being excellent in mechanical strength, an aqueous solution preferably contains fluorometallic acid salts such as ammonium hexafluorosilicate, ammonium hexafluorozirconate, and ammonium hexafluorotitanate. With respect to the compositions of the fluorometallic acid salts, it is desirable that the atom ratio (Si/Ti) of silicon to titanium is in the range of 99.9/0.1 to 60/40, the atom ratio (Ti/Zr) of titanium to zirconium is in the range of 99.9/0.1 to 90/10, and the atom ratio (Si/Zr) of silicon to zirconium is in the range of 99.9/0.1 to 90/10.

The photocatalyst action of the deposited titanium dioxide is remarkably restrained by using the fluorometallic acid salts as mentioned above. Besides the oxides of silicon and zirconium as mentioned above, alkali metals, such as lithium, potassium and sodium, are also effective as a component for controlling such a photocatalyst activity of titanium dioxide.

By forming an inorganic hydrophilic hard layer where the photocatalyst activity is restrained and controlling the deposition conditions such that the hydrophilic hard layer may have a nano-size concave structure, a surfactant can be impregnated in the concave portions, and the antifogging property becomes sustainable by extending the surfactant to the surface little by little.

In the present invention, the components to eliminate fluorine atoms in a fluorometallic acid salt are preferably boron compounds such as boron oxide and/or boric acid and the like.

Moreover, it is desirable for a formed inorganic hydrophilic hard layer to contain at least one atom selected from the group consisting of F, N, B, H, and O atoms, together with Si, Ti and Zr atoms.

The term "inorganic hydrophilic hard layer" used herein means a layer wherein a thin film formed by using the hard layer forming material of the present invention is inorganic and it has hydrophilic property as well as high degree of hardness at the same time. The term "hardening layer" used herein means a layer that is formed to coat the surface of a plastic lens with silica and other plastic materials in order to harden the surface.

Further, the inorganic hydrophilic hard layer thus formed has an advantage to make it possible to change its average refractive index by controlling the composition and select the best refractive index according to the usage.

### BRIEF DESCRIPTION OF THE DRAWINGS

Fig. 1 is a view schematically showing a device used for antifogging test carried out in Example 3 of the present invention.
Fig. 2 is a composition chart showing an example of the suitable amount of fluorometallic acid salts used in the process for producing the lens of the present invention.
Fig. 3 is a composition chart showing an example of a metal composition in an inorganic hydrophilic hard layer formed in the process for producing the lens of the present invention.
Fig. 4 is a graph showing the relationship between the period of use and the scar density (the number of scratches per unit area) in a coated lens (a glass lens with an inorganic hydrophilic hard layer of the present invention) and a noncoated lens (a conventional glass lens with a hardening layer).
Fig. 5 is a view showing an example of the section of an antifogging product of the present invention.
Fig. 6 is a view showing an example of the relationship between the deposition temperature of an inorganic oxide and the film thickness.
Fig. 7 is a chart showing the surface condition of a lens manufactured in an example of the present invention measured by AFM.
Fig. 8 is another chart showing the surface condition of a lens manufactured in an example of the present invention measured by AFM.
Fig. 9 is a view showing an example of the section of an antifogging material in other embodiment of the present invention.
Fig. 10 is a perspective view showing a goggle which is an example of a plastic window of the present invention.
Fig. 11 is a sectional view taken in A-A in Fig. 10.
Fig. 12 is an enlarged sectional view of the light transmissive plastic plate shown in Fig. 11.

### DETAILED DESCRIPTION OF THE INVENTION

The present invention will be explained below in more detail.

A forming material capable of forming a thin film by a chemical reaction in an aqueous solution is used to form an inorganic hydrophilic hard layer of the present invention.

The material is a mixture of a plurality of fluorometallic acid salts. The fluorometallic acid salt used herein has features in that it is soluble in an aqueous medium, and also a metal oxide is deposited by eliminating at least a part of fluorine atoms contained in the fluorometallic acid salt in the state dissolved in this medium by the use of other reactive species.

As examples of fluorometallic acid salts of the present invention, there can be mentioned three kinds of ammonium hexafluorosilicate ((NH₄)₂SiF₆), ammoniumhexafluorotitanate ((NH₄)₂TiF₆), and ammonium hexafluorozirconate ((NH₄)₂ZrF₆) as main compounds, and further mentioned ammonium hexafluorostannate ((NH₄)₂SnF₆), ammonium hexafluoroniobate ((NH₄)₂NbF₆), ammonium heptatantalate ((NH₄)₂TaF₇) and others as subsidiary compounds.

An oxide composite thin film is formed by using such fluorometallic acid salts. However, when titanium dioxide component to be deposited has strong photocatalyst activity, there is a possibility that the surfactant may be deteriorated by the influence of photocatalyst activity. Therefore, it is necessary to control this activity. It was found that the required mechanical strength could be maintained while restraining the photocatalyst effect by the existence of e.g. silicon dioxide and zirconium oxide, and the average refractive index of this oxide composite thin film can be made in the range where the film is not hindered on practical use.

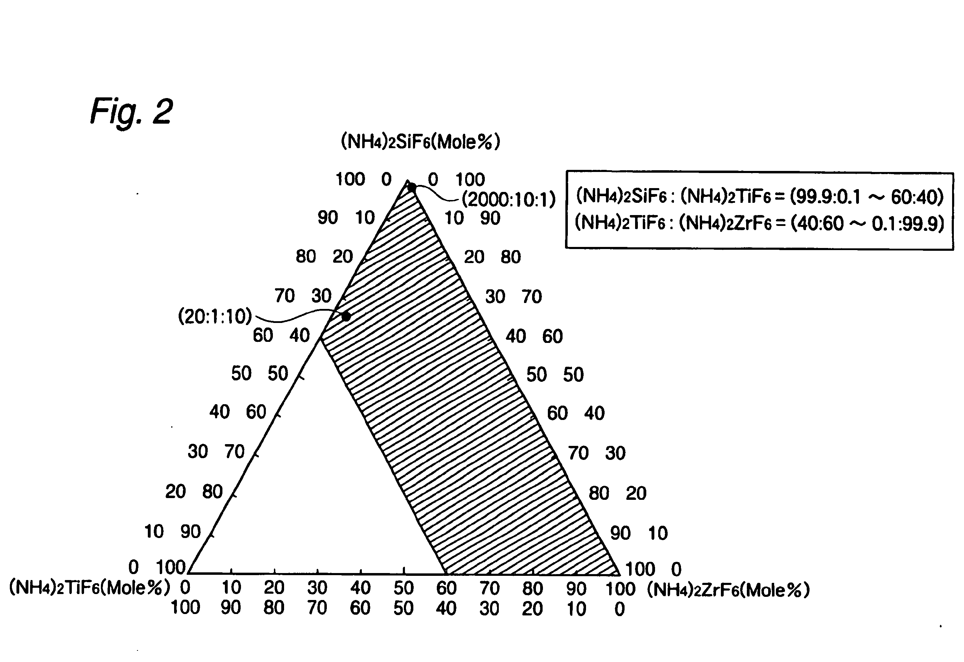

In this case, these compounds are used in the amounts such that the compounding ratio of (NH₄)₂SiF₆, (NH₄)₂ZrF₆ and (NH₄)₂TiF₆ becomes 20:1:10, 2000:10:1, 200:1:10 and 200:10:1 in a mole ratio. In the inorganic hydrophilic hard layer forming material of the invention, the fluorometallic acid salts comprise ammonium hexafluorosilicate, ammonium hexafluorozirconate and ammonium hexafluorotitanate, and contain less than 40 atomic percent of titanium and 60 atomic percent or more of total of silicon and zirconium, based on 100 atomic percent of titanium, silicon and zirconium. Further, these compounds are used in the amounts such that the metal atom ratio (Si:Ti) of silicon and titanium ranges from 99.9:0.1 to 60:40 and the metal atom ratio (Ti:Zr) of titanium and zirconium ranges from 40:60 to 0.1:99.9. Fig. 2 shows ranges of the suitable amounts in the cases where the above-mentioned fluormetallic acid ammonium salts are used. The shaded portion in Fig. 2 is the suitable range.

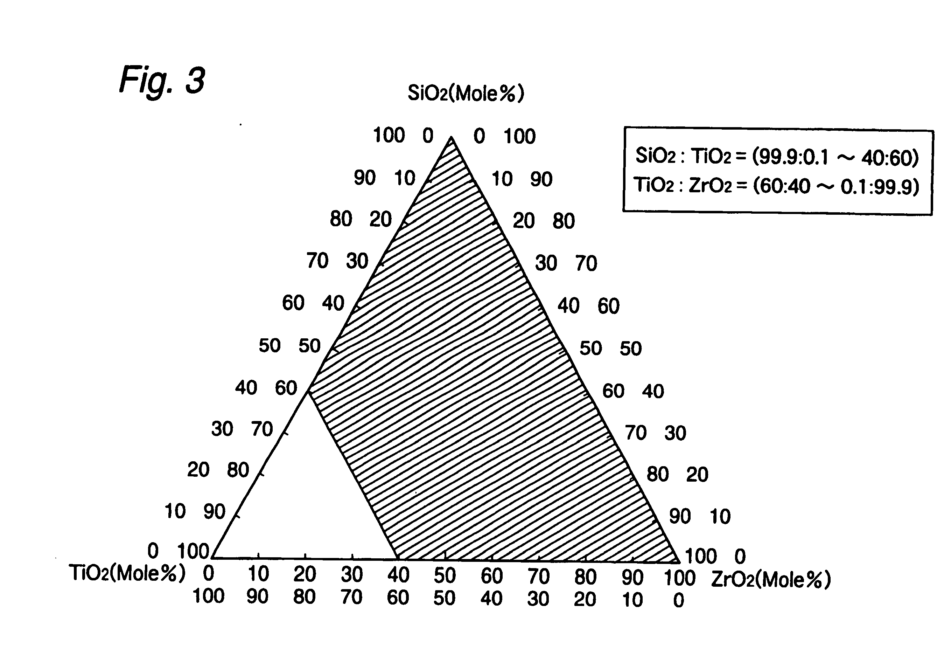

The inorganic hydrophilic hard layer forming material used in the invention is capable of forming an inorganic hydrophilic hard layer which contains less than 60 atomic percent of titanium and 40 atomic percent or more of total of silicon and zirconium, based on 100 atomic percent of titanium, silicon and zirconium. Especially, in the inorganic hydrophilic hard layer used in the present invention, the atom ratio (Si:Ti) of silicon and titanium ranges from 99.9:0.1 to 40:60 and the atom ratio (Ti : Zr) of titanium and zirconium ranges from 60 : 40 to 0.1:99.9. Fig. 3 shows suitable ratios of these silicon, titanium and zirconium in an inorganic hydrophilic hard layer. The shaded portion in Fig. 3 is the suitable range.

Further, in the inorganic hydrophilic hard layer forming material used in the invention, the ammonium hexafluorosilicate, ammonium hexafluorozirconate and ammonium hexafluorotitanate are mixed so as to deposit in an atomic percent ratio (Si/(Ti+Zr)) of Si to (Ti+Zr) of usually 99.9/0.1 to 40/60, preferably 99.9/0.1 to 50/50, especially preferably 95/5 to 45/55. Therefore, an inorganic hydrophilic hard layer having a high degree of mechanical strength and being remarkably excellent in both hydrophilic property and amphiphile property can be obtained.

The forming material for an inorganic hydrophilic hard layer of the present invention is an aqueous solution of compounds containing silicon, titanium and zirconium as metals, but besides these compounds, other fluorometallic acid salts such as ammonium hexafluorostannate ((NH₄)₂SnF₆), ammonium hexafluoroniobate ((NH₄)₂NbF₆), ammonium heptafluorotantalate ((NH₄)₂TaF₇), ammonium hexafluorogallate ((NH₄)₂GaF₆), and ammonium pentafluoroaluminate ((NH₄)₂AlF₅) may be contained in such ammonium salts of fluorometallicacids. These fluorometallic acid salts can be used alone or in combination. However, some of these other fluorometallic acid salts have refractive indexes remarkably different from those of glass lenses or plastic lenses, and some compounds to be deposited are colored, so that these fluorometallic acid salts is used in such amount that the metal atom is usually 10⁻³ to 60 atom %, preferably 10⁻² to 30 atom % based on 100% silicon atom, in order not to have such influence.

The fluorometallic acid salts are mentioned above by using examples of ammonium salt of fluorometallic acids, however, alkali metal salts, alkaline earth metal salts and the like may also be used. The deposition of this alkali metal does not directly relate to the capturing of fluorine with a boron compound, and the alkali metals exist in deposited crystals of titanium dioxide as impurities and are captured into an inorganic hydrophilic hard layer. Accordingly, though there is especially no limitation in the amount of an alkali metal salt in an inorganic hydrophilic hard layer forming material for a lens of the present invention, it is advantageous that the alkali metal salt in an inorganic hydrophilic hard layer forming material for a lens is used in an amount usually of 10⁻⁵ to 10⁻³ % by weight.

As the fluorometallic acid salts to be used in the present invention, there can be used salts having already been supplied as fluorometallic acid salt as mentioned above, and corresponding metal oxides can also be used after dissolving in an aqueous solution of hydrofluoric acid and neutralizing with a prescribed alkali.

The fluorometallic acid salts are dissolved in an aqueous medium and then used. Though the concentration of the fluorometallic acid salt in this case can be properly set in the range of the solubility of the salt, it is preferable to be in the range of 10⁻³ to 10² g/100 ml, and especially preferable to be 10⁻² to 30 g/100 ml.

As a result of dissolving a fluorometallic acid salt as mentioned above in an aqueous medium and capturing fluorine atoms in the fluorometallic acid salt with other reaction species in the solution, the solubility of these compounds in an aqueous medium decreases to deposit the compounds.

In the present invention, it is preferable to use a boron compound to capture a fluorine atom. As examples of boron compounds used herein, boron oxide, boric acid, borate and the like can be mentioned.

The boron compound is used in an amount sufficient to capture at least a part of fluorine atoms formoing a fluorometallic acid salt to be used, and it is desirably used in an amount of usually 10⁻² to 10⁵ moles, preferably 10⁻¹ to 10³ moles, and especially preferably 1 to 10² moles per one mole of a fluorometallic acid salt.

The boron compound in the above-mentioned amount is put into an aqueous medium in which a fluorometallic acid salt is dissolved. In this case, there is no particular limitation in the temperature of the solution, but the temperature is preferably adjusted to be about 10 to 50°C. Then, processing objects of a lens, a plastic substrate and the like are immersed in this aqueous solution. In this case, there is no particular limitation in the temperature of the solution, but the temperature is set to be usually 10 to 60°C, preferably about 25 to 50°C. There is no particular limitation in the reaction time under these conditions and the required time depends on the reaction temperature, but an oxide composite containing metal atoms of Si, Ti, Zr and optionally others as mentioned above can be deposited on the surface of a lens by allowing the solution to stand usually for 1 to 100 hours, preferably for 5 to 72 hours, and especially preferably for 10 to 60 hours. The lens on which the composite has been deposited on the surface is taken out of the solution, and it is usually washed with water and then dried.

The oxide composite layer thus deposited has desirably a uniform thickness and a flat or smooth surface with nano-size concave portions. Accordingly, the surface of a lens where an oxide composite has deposited as mentioned above is preferably soft polished with a relatively soft material such as leather and the like to be flattened or smoothed.

Further, the average thickness of an inorganic hydrophilic hard layer formed on the surface of a lens is usually in the range of 10Å to 0.5 µm, and preferably 500Å to 0.3 µm.

As described above, when an eye-glass lens is put in a high humidity environment, minute drops of water are formed on the surface, resulting in the scattering of light, which clouds the glass lens. Therefore, it is the first requirement needed for antifogging that the surface of a glass lens is formed with a highly hydrophilicmaterial. In order that drops of water may adhere to the surface of the base material of an eye-glass lens and expand to be an ultra-thin film giving a transparent feeling, the contact angle to water of the base material itself is required to be unlimitedly near to 0°.

In order to make a lens to have antifogging property, a material whose contact angle to water of the base material itself is as close as possible to 0° is used or a material whose contact angle is as close as possible to 0° can be constantly supplied to the surface of the base material. The contact angle between said inorganic hydrophilic hard layer and water is generally in the range of 0 to 50 ° , preferably 0 to 30 ° , most preferably unlimitedly near to 0.

Although the above-mentioned inorganic hydrophilic hard layer is hydrophilic, the antifogging performance is not sufficient. Therefore, if a surfactant having an excellent antifogging property is used and the surfactant is made to be adsorbed in an inorganic hydrophilic hard layer and expanded on the surface little by little, the antifogging property becomes sustainable over a long period of time, specifically, several days or more. In order to make the surfactant adsorbed, the base material is required to be hydrophilic, and the inorganic hydrophilic hard layer of the present invention has an enough specific feature to make the surfactant adsorbed. However, the inorganic hydrophilic hard layer according to the present invention contains titanium dioxide having a photocatalyst activity, so that it is necessary to control the photocatalyst activity in order not to decompose the surfactant due to the photocatalyst action of the titanium dioxide. The present inventors have found that when metal oxides such as silicon dioxide, zirconium oxide and optionally others coexist with the titanium dioxide, the photocatalyst activity can be controlled to the degree of being harmless in practical use of the inorganic hydrophilic hard layer.

Further, the inorganic hydrophilic hard layer according to the present invention can provide sufficient strength for being used in eye-glass lens applications by adding a small amount of ZrO₂ component to a SiO₂·TiO₂ composite film.

In the glass lens of the present invention, Mohs' hardness of the inorganic hydrophilic hard layer is generally in the range of 5 to 9, preferably 7 to 9.

Furthermore, the surfactant to be impregnated into the inorganic hydrophilic hard layer of the present invention may be any of cationic surfactants, anionic surfactants, amphoteric surfactants, and nonionic surfactants. Examples thereof include sodium alkylether sulfate, polyoxyethylene alkylether, fatty acid alkanolamide, fatty acid methylglucamide, sodium α-olefin sulfonate, alkylamine oxide, linear alkylbenzene sulfonic acid, and others. The surfactant is impregnated in an amount of 50% by weight or less, preferably 30% by weight or less, most preferably 20% by weight or less in the inorganic hydrophilic hard layer.

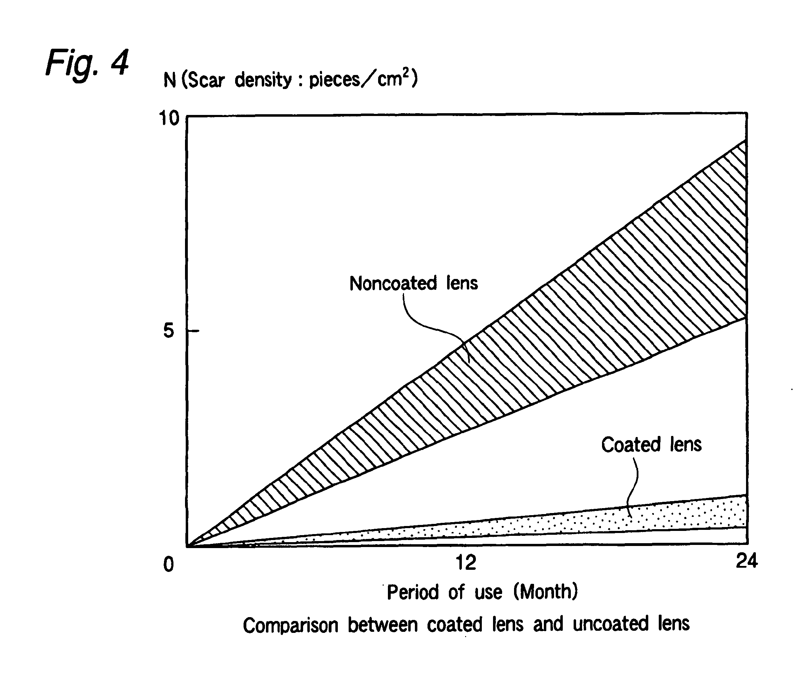

Fig. 4 is a graph showing the relationship between the period of use and the scar density (number of scratches per unit area) in a coated lens (a glass lens on the surface of which an inorganic hydrophilic hard layer is thus formed) and a noncoated lens (a conventional eye-glass lens with a hardening layer) . As is clear from a graph shown in Fig. 4, a great number of scratches are generated on the conventional eye-glass lens in a short period of time, while the number of scratches becomes extremely small on the glass lens with an inorganic hydrophilic hard layer of the present invention. According to a report of a monitor who daily used an eye-glass lens with an inorganic hydrophilic hard layer of the present invention, no scratches detectable with the naked eye could be found on the surface even after using it for 6 months.

The antifogging product of the present invention will be explained below.

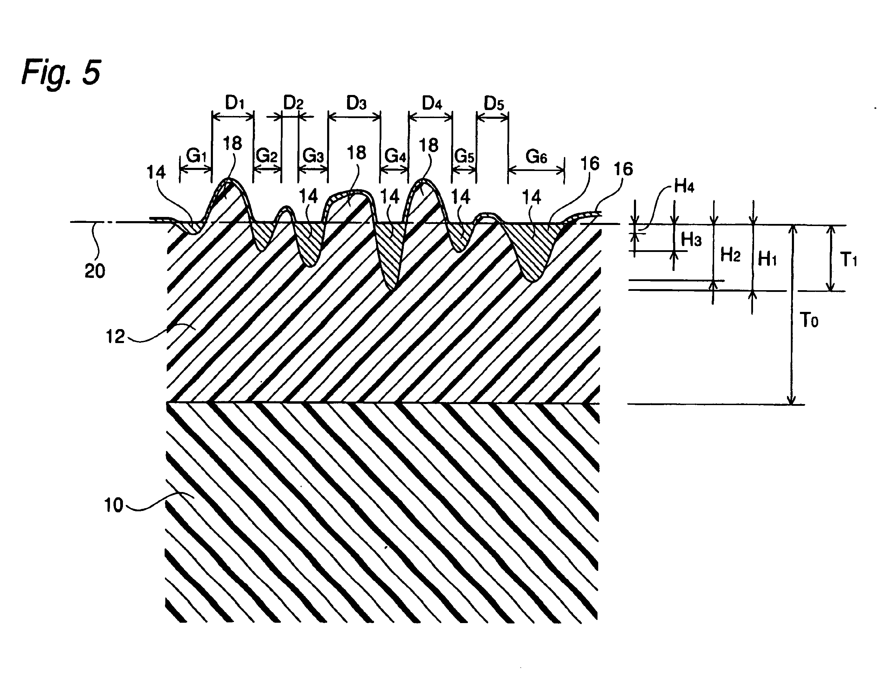

Fig. 5 is a view schematically showing an example of the section of an antifogging product of the present invention.

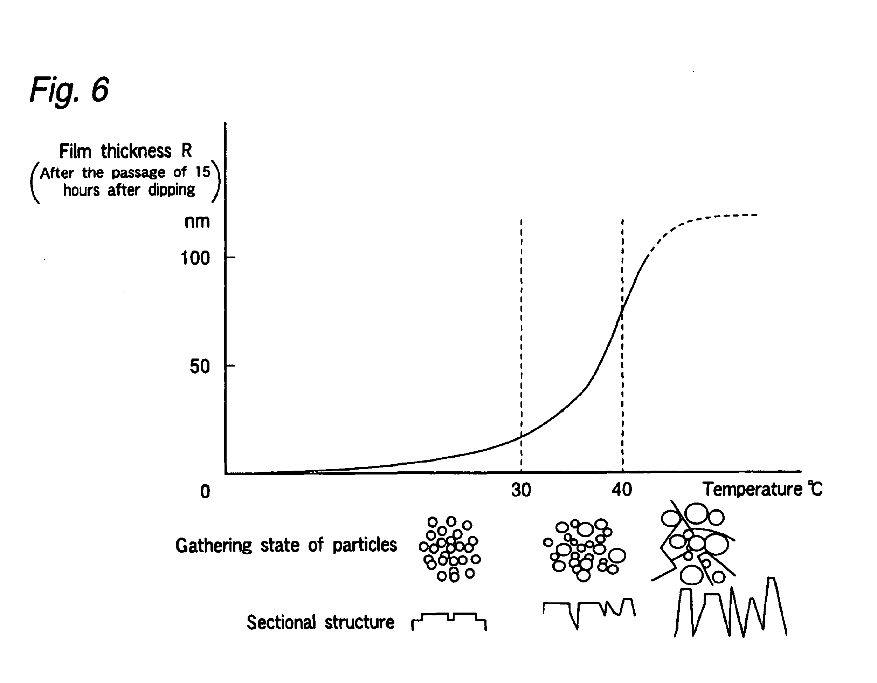

Fig. 6 is a graph showing an example of the relationship between the deposition temperature of an inorganic oxide and the film thickness.

As shown in Fig. 5, the antifogging product 1 of the present invention has light transmissive base material 10 and transparent hydrophilic part 12 formed on the surface.

In the antifogging product of the present invention, the light transmissive base material 10 can be formed by glass, transparent plastic, and others, and it may be tabular or curved. For example, if the antifogging product of the present invention is an eye-glass lens, this light transmissive base material 10 is a lens made of glass, plastic, and the like. Moreover, for example, when this light transmissive base material 10 is a lens of glass, a lens of plastic or the like, various types of layers, including a hard layer, an antireflection layer and a refractive index adjusting layer, may be laminated on the surface. In addition, these layers may be used a lone or a plurality of these layers may be laminated, and one layer of these layers may have a plurality of actions and effects.

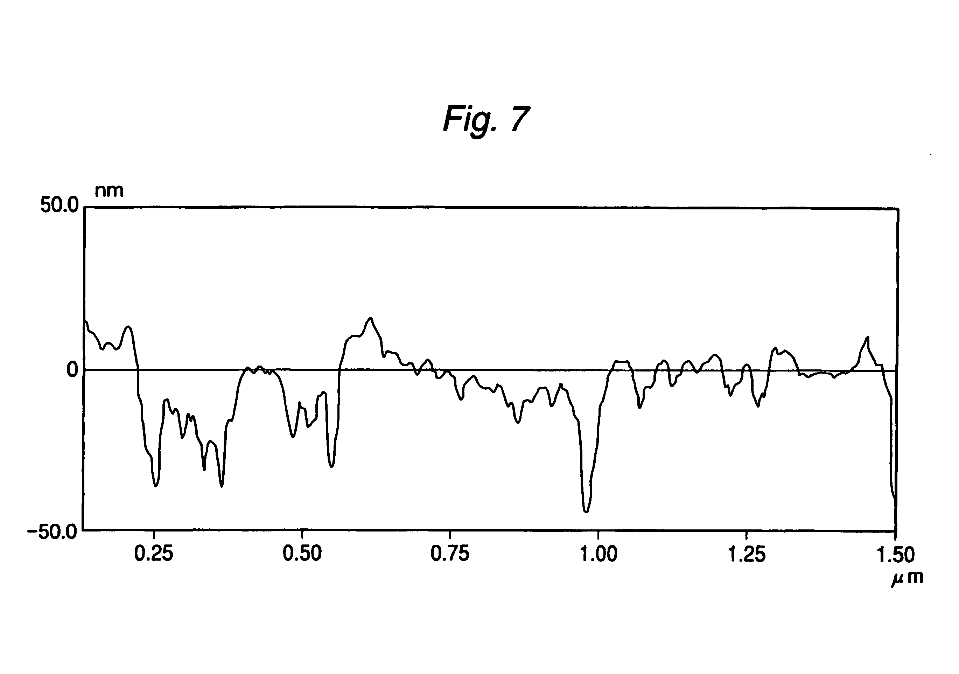

On the surface of the antifogging product 1 of the present invention, an inorganic hydrophilic hard layer is formed and this layer exhibits the hydrophilic property. The surface of the inorganic hydrophilic hard layer is not flat or smooth, but concavo-convex. As shown in Fig. 5, if a virtual center line passing through approximately the center of the concavo-convex portions is supposed, the lower part of the virtual center line 20 is concave portions 14 for sustaining a surfactant, and in this nano-size concave portions 14, the surfactant 16 is filled. Further, because the concavo-convex portions are formed on the surface of the antifogging product 1 of the present invention, when it is not particularly limited, this virtual center line is considered to show the surface of an antifogging product. As shown in Fig. 6 and Fig. 7, this virtual center line 20 is approximately consistent with a baseline used for analyzing the surface of an antifogging product of the present invention by means of AFM (Atomic Force Microscope).

The average depth of the concave portions 14 from the surface (that is, the virtual center line 20) is 10 nm to 10 µm, and further this average depth is preferably in the range of 20 nm to 5 µm, and most preferably in the range of 50 nm to 3 µm.

The average depth of the concave portions 14 is the average value of H₁, H₂, H₃, H₄, ..... Hₙ in Fig. 5. Because the depth of the concave portions 14 as mentioned above is approximately equal to the wavelength of light transmitting the antifogging product 1 of the present invention, the light transmission properties of the antifogging product 1 of the present invention do not decrease remarkably due to the existence of the concave portions 14, so that the antifogging product can maintain good light transmission properties.

In the embodiment shown in Fig. 5, the average spacing in the concave portions 14 is desirably 5 nm or more, preferably in the range of 5 nm to 1000 nm, especially preferably in the range of 5 nm to 500 nm.

Furthermore, the width of the openings in the concave portions 14 is the average value of widths G₁, G₂, G₃, G₄, G₅, G₆, ..... Gₙ of the concave portions 14 in the virtual center line 20, and the average value of the width of the openings of the concave portions 14 is usually 5 nm to 1000 nm, preferably 5 nm to 700 nm, and especially preferably 5 nm to 500 nm.

The inorganic hydrophilic hard layer having the concave portions 14 as mentioned above can be produced by depositing inorganic hydrophilic substances at a prescribed temperature, as is clear from a graph showing the deposition temperature of an inorganic hydrophilic substance and the film thickness (surface structure) in Fig. 6.

In the antifogging product 1 of the present invention, it is preferable that at least 10% of the surface of the light transmissive base material 10 is coated with the inorganic hydrophilic hard layer, and it is especially preferable that 70% or more of the surface of the light transmissive base material 10 is coated with the inorganic hydrophilic hard layer in order to reveal the good antifogging property.

Surfactant 16 is filled in the concave portions 14 as mentioned above. As the surfactant 16 to be used in the present invention, anionic surfactants such as alkylether sodium sulfate, cationic surfactants, nonionic surfactants such as polyoxyethylene alkylether, amphoteric surfactants such as fatty acid alkylglucamide can be used. These surfactants can be used separately or in combination. The surfactant 16 can be filled in the concave portions 14 by dissolving it in a solvent such as water and applying it, or by applying it as it is without using any solvent. The surfactant 16 thus filled in the concave portions 14 is continuously supplied in small amounts to the surface of the antifogging product to inhibit the generation of waterdrops and maintain the antifogging property. Therefore, even if the environment, for example, humidity, temperature or the like suddenly changes, no waterdrop adhere to the antifogging product 1 of the present invention and water also spread like a thin film, so that it does not become cloudy.

The average thickness T₀ of the inorganic hydrophilic hard layer in the antifogging material 1 of the present invention is usually 300 nm or less, preferably 200 nm or less, and especially preferably 100 nm or less.

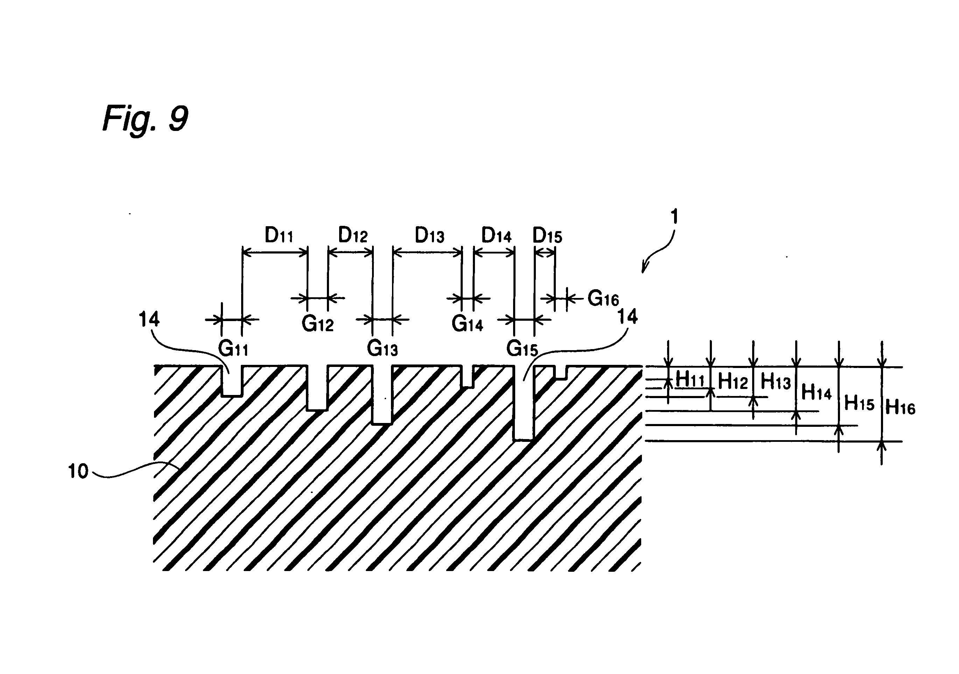

Moreover, because the antifogging property in the antifogging product 1 of the present invention greatly depends on the decrease in the surface tension of water due to the surfactant 16 filled in the concave portions 14, as shown in Fig. 9, a good antifogging property can also be revealed by directly forming concave portions 14 on the light transmissive base material 10 and filling up a surfactant in the concave portions 14. The average depth of the concave portions 14 in this case is, similarly to that in Fig. 5 described above, the average value of H₁₁, H₁₂, H₁₃, H₁₄, H₁₅, H₁₆ ..... Hₙ, and is 10 nm to 10 µm, further this average depth is preferably in the range of 20 nm to 5 µm, and especially preferably in the range of 50 nm to 3 µm. The spacing of the concave portions 14 is the average value of D₁₁, D₁₂, D₁₃, D₁₄, D₁₅ ..... Dₙ, and is 5 nm or more, preferably in the range of 5 nm to 1000 nm, and especially preferably in the range of 5 nm to 500 nm. Further, the average diameter of the openings of the concave portions 14 is the average value of G₁₁, G₁₂, G₁₃, G₁₄, G₁₅, G₁₆ ..... Gₙ, and is usually 5 nm to 1000 nm, preferably 5 nm to 700 nm, and especially preferably 5 nm to 500 nm.

By filling up a surfactant (not shown in the figure) in the concave portions 14 formed as shown in Fig. 9, the surfactant is continuously supplied in small amounts to the surface of the light transmissive base material 10 to form the thin film of the surfactant on the surface, resulting in providing a high antifogging property to the antifogging product 1.

The antifogging product as mentioned above has a peculiar surface structure. In producing an antifogging product of the present invention, any method for forming such a surface structure can be adopted without any limitation. As examples of the methods for forming such an antifogging product, there can be mentioned a method of etching a film after forming the film by multinary vacuum deposition method and the like, a method of constructing these surface structures with an ion beam irradiation technique, and others.

In forming an inorganic hydrophilic hard layer according to the present invention, temperature control of an aqueous solution is also important. As shown in Fig. 6, a fine film with uniform particle size is formed in the deposition reaction at temperatures lower than 30°C, but the film forming speed becomes one-third or less of that under the temperature conditions of 30°C or higher and lower than 40°C. To the contrary, under the environment of forming a film at 40°C or higher, the surface is rough and the particle size also becomes large, and the transparency of the film may be often reduced. Further, the film forming speed also increases, and excessive film thickness may cause the occurrence of cracks. Therefore, in the production of the antifogging product of the present invention, it is important to control reaction temperature in conformity with the kind and purpose of a base material to be aimed at.

Furthermore, because too high deposition temperature may cause rapid increase in deposition speed, resulting in the increase in the viscosity of the aqueous solution, the adhesion and growth of a film on a metal oxide is conversely inhibited.

Reactions in an aqueous solution for a film formation generally proceed in the following formulas.

First, the dissolution of a fluorometal complex compound in an aqueous solution is represented by the following reaction formula.

(NH₄)₂MeF₆ + H₂O = 2NH₄⁺ + MeF₆²⁻ + H₂O (Me: a metal atom)

In this state, if boric acid is added as a fluorine scavenger, the following two reaction formulas proceed simultaneously to deposit a metal oxide.

MeF₆²⁻ + 2H₂O = MeO₂ ↓ + 6F⁻ + 4H⁺

BO₃³⁻ + 3F⁻ + 6H⁺ = BF₃ + 3H₂O

In the application to, for example, glasses, because the inorganic hydrophilic hard layer has to be used as the outermost layer of the antireflection film in the present invention, it is very difficult for a deposit from a single component to satisfy all of the refractive index, hardness and functional properties. Moreover, some nano-size concave portions capable of holding a surfactant have to be formed on the surface of the formed transparent hydrophilic part.

However, when a functional composite film (Me_{I}O₂/Me_{II}O₂/Me_{III}O₂) having some features in the surface morphology is formed by a multicomponent simultaneous deposition method and the component amount ratio of the oxides of Me_{I}, Me_{II} and Me_{III} is optimized, the refractive index, hardness and functionality (conformability (wettability) to a surfactant) can be adjusted.

Fig. 6 schematically shows the relationship between the deposition temperature, the film thickness, and the surface structure when a specific substance is deposited.

The antifogging product having a different gathering state of particles can be formed in the deposit by changing the deposition temperature range of the metal oxide to lower than 30°C, 30°C or higher and lower than 40°C, and 40°C or higher.

In case of deposition under temperature conditions of lower than 30°C, a surface where the surface of a base material is regularly coated can be formed by gathering deposited particles in the first layer, which particles are within the range of several nanometers to several tens of nanometers in particle size, and further, the deposition of particles proceeds while forming island shaped particle aggregates (aggregates where projecting particles are deposited) on the surface. Therefore, in cases where a film is formed at 30°C or lower, the film formed on an antifogging product is fine and has little unevenness on the surface.

To the contrary, in the temperature region of 30°C or higher and lower than 40°C, metal oxide particles having particle sizes of several nanometers to several hundred nanometers are deposited, and a metal oxide deposition layer is formed in the state where metal oxide particles having different particle sizes within the above described range are mixed. Therefore, slightly a great number of unevenness is formed on the surface structure of the antifogging product of the present invention. The surface structure formed in this region is the most suitable to reveal the function of the present invention.

Further, when the deposition temperature is 40°C or higher, particles of several hundred nanometers in particle size are increased, and the formed film is apt to crack. In addition, the formed film itself may cloud due to light scattering, and the surface state becomes considerably rough, nearly a porous state.

The temperature condition is one factor to control the deposition reaction. For example, even in the above-mentioned temperature region, the state of a metal oxide to be deposited will change by other factors, including the concentrations of the raw materials.

Further, when the reaction time becomes long and at the end of the deposit ion process, the polymerization reactions and the like of raw materials proceed in the aqueous solution, and the viscosity of the reaction solution increases rapidly. In such a state, the film formation speed is greatly reduced.

The antifogging product of the present invention has a surface structure for stably retaining a surfactant for a long period of time that metal oxides are deposited in order to have much nano-size concave portions of 10 nm to 10 µm in average depth from the surface and the concave portions are filled with the surfactant.

Moreover, in the present invention, the inorganic hydrophilic hard layer can be formed on one side of a plastic or glass plate, where nano-size concave portions are formed thereon and are made to contain a surfactant, and as a result, the thus processed plastic or glass plate can be suitably used as, for example, a window material having excellent antifogging property, and others. Further, when the inorganic hydrophilic hard layer is thus formed on one side of the plate and a reflection layer is formed on the opposite side thereof, the plate can be used as a mirror having antifogging property.

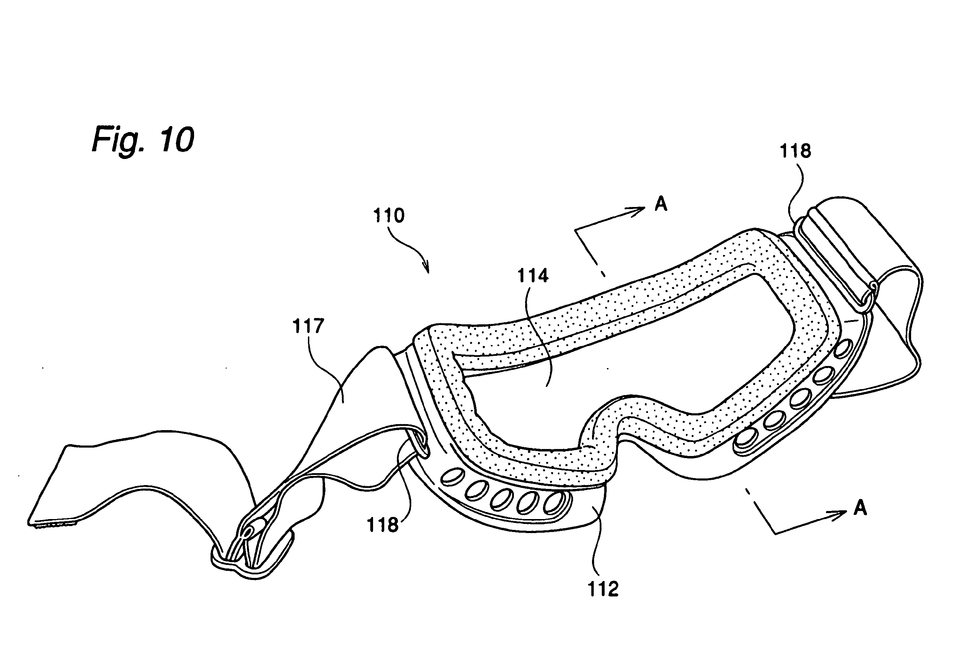

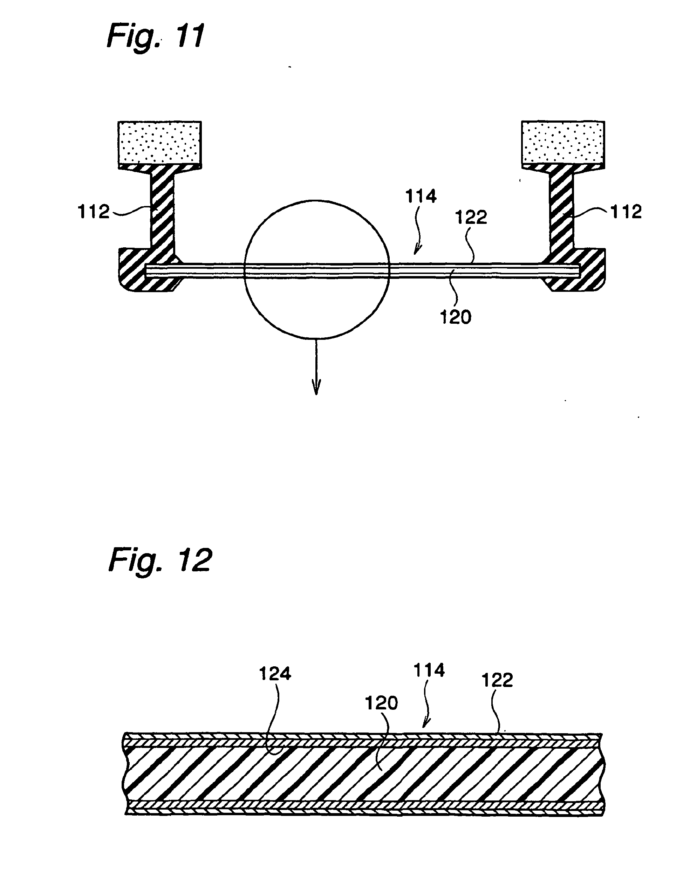

Fig. 10 is a perspective view showing a goggle which is an example of a plastic window 110 of the present invention. In Fig. 10, the plastic window 110 has a light transmissive plastic plate 114 and a frame 112 provided around the plate. Both the outer sides of the frame 112 equip with catching parts 118 for fixing a strap 117 in wearing the goggle. The plastic plate 114 put in the frame 112 comprises a highly transparent plastic substrate 120 and an inorganic hydrophilic hard layer 122 formed on the surface of the substrate. Fig. 11 is a sectional view taken in A-A in Fig. 10 and Fig. 12 is an enlarged sectional view of the light transmissive plastic plate in Fig. 11.

Thus, by forming the inorganic hydrophilic hard layer of the present invention on both sides or one side of a plastic or glass plate, the treated plate can be used in various applications, including goggles, a window of a building, a viewfinder, a supervisory camera cover, a window of a plastic cistern, a display window of a cellular phone, a window for an arcade, a carport, a sound insulating board, and a signboard.

### EFFECT OF THE INVENTION

According to the present invention, by using a specific inorganic hydrophilic hard layer forming material, an inorganic hydrophilic hard layer containing nano-size concave portions can be formed on the surface of a lens or a light transmissive base material. In the concave portions thus formed, a surfactant can be impregnated and extended to the surface little by little, so that a lens exhibiting excellent hydrophilicity for a long period of time can be produced. Further, because other coexistent oxide inhibits the photocatalyst action of titanium dioxide contained in the inorganic hydrophilic hard layer according to the present invention, the surfactant is not decomposed by the photocatalyst action possessed in this layer and is stably impregnated for a long period of time, so that the effect of the surfactant can be maintained for a long time.

Moreover, according to the present invention, an inorganic hydrophilic hard layer formed on the surface of a base material has high mechanical strength and excellent abrasion resistance.

### EXAMPLE

The present invention will be described in more detail with reference to the following Examples of the present invention, but the present invention should not be restricted by these Examples.

### Example 1

Mixed powder containing 10 g of SiO₂, 5 g of TiO₂ and 1 g of ZrO₂ was put in an aqueous solution in which 3 ml of 46% HF aqueous solution was dissolved in 600 ml of pure water, and then the reaction of the mixture was carried out with vigorously stirring at about 25°C for 24 hours. Thereafter, the aqueous solution in which unreacted powder had remained was left to stand and the supernatant liquid was batched off. NH₄OH aqueous solution was dropwise added to the supernatant liquid with a pipette. As the NH₄OH aqueous solution was thus added, the whole aqueous solution came to be a slightly clouded state. Thereafter, when the whole liquid became transparent, the addition of NH₄OH aqueous solution was stopped, and the preparation of the processing liquid was completed. Ten grams of boron oxide (B₂O₃) was added to 600 ml of this processing liquid (40°C), and the whole liquid was strongly stirred to dissolve completely. In the state of keeping the processing liquid at 40°C, a plastic lens provided with a hard layer was dipped and kept in the processing liquid for 36 hours. After the above described time was passed, the lens was taken out from the processing liquid, and then the surface was washed and dried.

When the lens base material thus surface-processed was set in a high humidity environment, only water film was formed on the surface and its transparency was maintained, while a usual uncoated (unprocessed) lens was clouded. This transparency had no problem for practical use from the viewpoint of applying to a lens. In addition, almost no photocatalyst effect was found.

The composition of the thin film formed on the surface of the lens was analyzed by means of a fluorescent X-ray analysis device (XRD: made by JEOL, Ltd.), and as a result, it was found that the film was a compound having the composition as shown in Table 1.

**Table 1: XRD analysis results of the lens coats**

| Atoms contained | Si (atomic %) | Zr (atomic %) | Ti (atomic %) | F (atomic %) |
|---|---|---|---|---|
| Run 1 | 56.47 | 5.27 | 37.69 | 0.56 |
| Run 2 | 66.21 | 10.31 | 23.03 | 0.45 |
| Run 3 | 48.55 | 16.01 | 35.36 | 0.08 |
| Run 4 | 51.86 | 6.32 | 41.24 | 0.58 |
| Run 5 | 60.61 | 4.52 | 34.14 | 0.73 |
| Run 6 | 51.36 | 10.55 | 38.09 | 0 |
| Run 7 | 63.68 | 6.38 | 29.38 | 0.56 |
| Run 8 | 65.55 | 8.86 | 24.89 | 0.7 |
| Run 9 | 62.18 | 9.08 | 28.01 | 0.73 |
| Run 10 | 66.36 | 13.01 | 20.08 | 0.56 |
| Average | 59.283 | 9.031 | 31.191 | 0.495 |

### Example 2

Ten grams of ammonium hexafluorosilicate ((NH₄)₂SiF₆), 1 g of ammonium hexafluorozirconate ((NH₄)₂ZrF₆), and 5 g of ammonium hexafluorotitanate ((NH₄)₂TiF₆) were weighed, and then they were mixed and dissolved in 600 ml of pure water at 40°C to prepare a liquid.

Ten grams of boron oxide was added to the thus prepared liquid and the whole processing liquid was strongly stirred to dissolve completely. A plastic lens provided with a hard coated layer, which lens had been prepared in advance, was dipped in the processing liquid. After dipping for 24 hours in the state of keeping the processing liquid at 40°C, the lens was taken out from the processing liquid, and then the surface was washed and dried.

When the thus coated lens was set in a high humidity environment, the coated lens still maintained the transparency and was confirmed to be endurable for applying to a lens, while a usual uncoated lens was clouded. In addition, almost no photocatalyst effect was found.

Further, dirt on the coated lens can be removed by water washing. Though the water washing of the lens was continuously carried out for about one year, no large scratches were found on the surface of the lens.

**Table 2: XRD analysis results of the lens coats**

| Atoms contained | Si (atomic %) | Zr (atomic %) | Ti (atomic %) | F (atomic %) |
|---|---|---|---|---|
| Run 1 | 66.78 | 13.35 | 19.17 | 0.69 |
| Run 2 | 65.24 | 4.91 | 29.12 | 0.74 |
| Run 3 | 62.45 | 10.05 | 27.47 | 0.01 |
| Run 4 | 58.77 | 7.38 | 33.55 | 0.3 |
| Run 5 | 46.73 | 8.11 | 45.16 | 0 |
| Run 6 | 56.22 | 5.05 | 38.46 | 0.27 |
| Run 7 | 59.46 | 7.08 | 33.01 | 0.45 |
| Run 8 | 42.91 | 9.91 | 47.06 | 0.12 |
| Run 9 | 51.24 | 7.12 | 41.21 | 0.43 |
| Run 10 | 52.9 | 13.31 | 32.94 | 0.85 |
| Average | 56.27 | 8.627 | 34.715 | 0.386 |

### Example 3

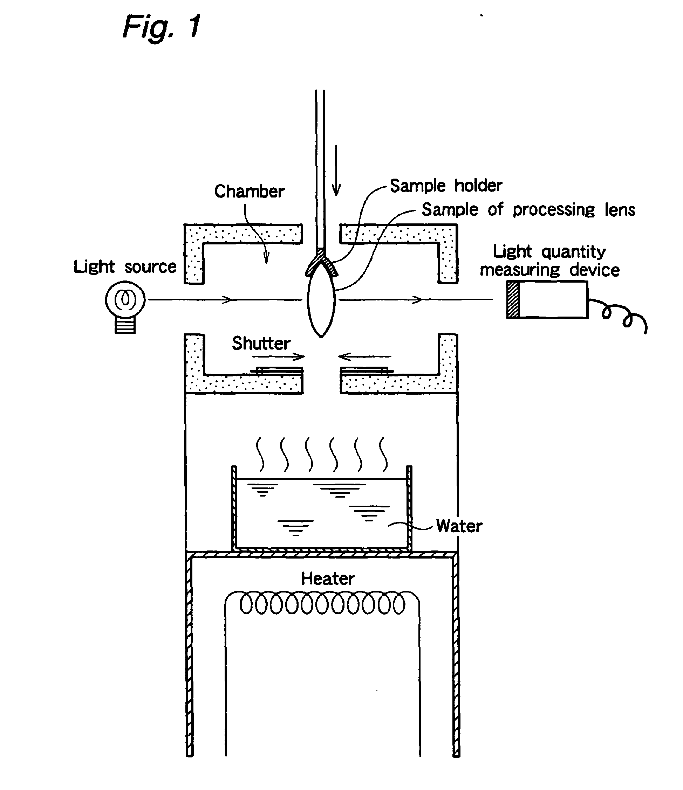

After eye-glass lenses coated with an inorganic hydrophilic hard layer according to the present invention were left to stand in a darkroom for one week, two weeks, one month, and three months, respectively, the glass lenses were taken out from the darkroom and it was confirmed whether they reveal an antifogging effect with a high humidity chamber shown in Fig. 1.

With respect to the thin films formed on the surfaces of lenses used here, the composition was measured in the same manner as in Example 1 and the results are shown in Table 3.

**Table 3 XRD analysis results of the lens coats**

| Atoms contained | Si (atomic %) | Zr (atomic %) | Ti (atomic %) | F (atomic %) |
|---|---|---|---|---|
| Run 1 | 57.68 | 2.11 | 36.29 | 0.96 |
| Run 2 | 59.91 | 12.08 | 27.61 | 0.4 |
| Run 3 | 54.19 | 9.21 | 36.25 | 0.34 |
| Run 4 | 67.18 | 8.81 | 22.38 | 0.53 |
| Run 5 | 65.98 | 5.71 | 27.38 | 0.93 |
| Run 6 | 56.3 | 10.55 | 32.84 | 0.3 |
| Run 7 | 62.87 | 3.38 | 33.06 | 0.69 |
| Run 8 | 58.87 | 12.21 | 28.37 | 0.55 |
| Run 9 | 45.95 | 10.55 | 42.87 | 0.64 |
| Run 10 | 56.48 | 3.81 | 42.87 | 0.66 |
| Average | 58.541 | 7.842 | 32.992 | 0.6 |

The lenses taken out from the darkroom were set in the chamber shown in Fig. 1 and were measured for every sample by means of a light quantity measuring device.

As a result, every sample showed high quantity of transmitted light and the decrease in the quantity of light due to clouding was not observed.

From the results, it was ascertained that the antifogging effect according to the present invention was not based on super-hydrophilicity caused by photocatalyst. That is, if super-hydrophilicity is caused by photocatalyst, the quantity of transmitted light will change in proportion to elapsed time, but in this example, the quantity of transmitted light did not change in proportion to elapsed time.

**Table 4**

| | Elapsed time | | | |
|---|---|---|---|---|
| | 1 week | 2 weeks | 1 month | 3 months |
| Measured quantity of light | 98% | 92% | 93% | 95% |
| | 92% | 91% | 92% | 94% |
| | 93% | 93% | 94% | 94% |
| Note: Quantity of light measured in the state of closing a shutter is taken as 100% (it will decrease to 60% or below, when the lens is fogged). Quantity of transmitted light decreases, when a transparent water film is formed on the lens, up to around 90%. | | | | |

As is clear from the quantity of transmitted light shown in Fig. 4, the eye-glass lens used in this example showed good antifogging action and moisture having adhered to the surface of the eye-glass lens formed a thin water film layer, although it was stored in a darkroom and was not exposed to ultraviolet light. Accordingly, ultraviolet light does not take part in the formation of the inorganic hydrophilic hard layer on the surface of the lens with the use of an inorganic hydrophilic hard layer forming material for a lens of the present invention and in the hydrophilicity of the formed layer.

### Example 4

Fifteen grams of ammonium hexafluorosilicate, 0.1 g of ammonium hexafluorozirconate and 5 g of ammonium hexafluorotitanate were dissolved in 600 ml of pure water, and mixed and stirred. After sufficient mixing and stirring of the mixture, 15 g of boron oxide was added to the mixture and completely dissolved while stirring and mixing. At this step, the state of the processing liquid was colorless and transparent. In this solution, a plastic lens base material provided with a hard layer was dipped and was left to stand for 24 hours while keeping the processing liquid at 40°C.

It was observed that the processing liquid began to be clouded from about 5 or 6 hours later, and the deposition was proceeding gradually. After 24 hours passed, the lens base material was taken out from the processing liquid and lightly washed with pure water.

Then, the lens base material was dipped again in another processing liquid that had been prepared in advance in the following manner: 15 g of ammonium hexafluorosilicate, 5 g of ammonium hexafluorozirconate and 0.75 g of ammonium hexafluorotitanate were mixed and dissolved in 600 ml of pure water and further 15 g of boron oxide was added and dissolved completely. The dip was carried out by keeping the processing liquid at 40°C and leaving the material to stand for about 10 hours.

After 10 hours passed, the lens base material was taken out, then lightly washed with lukewarm water and dried.

Almost no photocatalyst activity was found in the thus obtained inorganic hydrophilic hard layer.

After being dried, the lens was polished with chamois leather and dipped in pure water, showing high hydrophilicity. Moreover, when the surface of the lens was thinly coated with a surfactant of 43% by weight containing a compound of sodium alkyl sulfate as a main component, the antifogging effect was maintained after 2 weeks and almost no scratch-like scar, which appears as a sign of deterioration on the surface of a lens under the high humidity environment, was formed.

### Example 5

Fifteen grams of ammonium hexafluorosilicate ((NH₄)₂SiF₆), 0.75 g of ammonium hexafluorotitanate ((NH₄)₂TiF₆), and 0.1 g of ammonium hexafluorozirconate ((NH₄)₂ZrF₆) were weighed, and then they were put in 400 ml of pure water warmed to 30 to 45°C, and the mixture was stirred and mixed. Ten grams of boron oxide was added to the thus prepared processing liquid. The whole processing liquid was vigorously stirred and boron oxide was completely dissolved in the processing liquid.

After a short time in the state of keeping the processing liquid at 40°C, the whole liquid began to be clouded, therefore, a plastic lens substrate provided with a hard layer, which lens had been prepared in advance, was dipped in the processing liquid. After 24 hours passed, the substrate was taken out, and slightly washed with water and dried.

The average thickness of the thus formed inorganic hydrophilic hard layer was about 1000Å, and it could be confirmed by means of a fluorescent X-ray analysis device (XRD: made by Nihon Denshi Co., Ltd.) that atoms of Si, Ti, Zr and F existed in the thus formed inorganic hydrophilic hard layer. Further, the atomic ratio Si:Zr:Ti in the mixed regent was 200:1:10, and in the deposited layer, the atomic percent ratios of Ti:Zr and Si:(Zr+Ti) were 32:2 and 63:37, respectively.

Almost no photocatalyst activity of the thus obtained inorganic hydrophilic hard layer was found.

This surface treated lenses were attached to an eye-glass frame, and this eye-glasses were continuously used for about 1 year under ordinary use conditions that if the lens was stained, the surface was washed with water and soaked by a surfactant.

After the passage of time for using like this, the surface state was compared with that of an ordinary lens that had not been processed at all and used under the same conditions (see Fig. 4). As seen from the figure, the number of scratches is less in the lens with the inorganic hydrophilic hard layer than the ordinary lens. An eye-glass lens with the inorganic hydrophilic hard layer after the use of 1 year was soaked by a surfactant, and put into a high temperature and high humidity container where the temperature difference and humidity difference with the glass lens were set to be 20°C and 70%, respectively. However, no clouding was generated in the eye-glass lens.

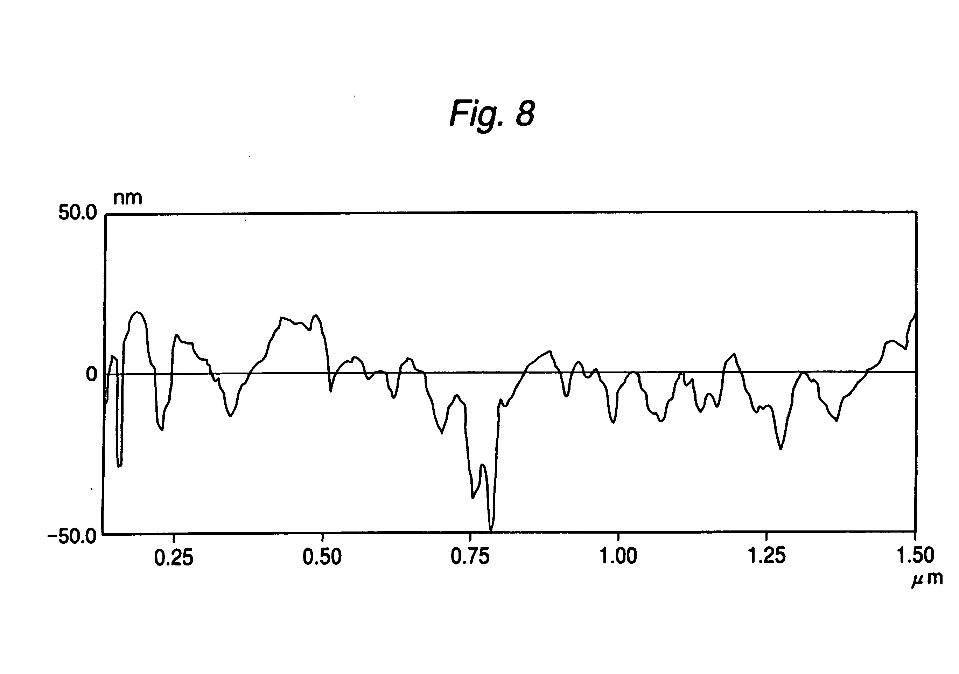

Next, 2 pieces of specimens of 5×5 mm were cut off from part of the surface of the lens, and the surface structure of the specimen was measured by means of AFM (Atomic Force Microscope). The results are shown in Fig. 7 and Fig. 8. From the results, it could be confirmed that the objective surface structure was formed on the surface of the lens base material.

### Example 6

Ammonium hexafluorosilicate ((NH₄)₂SiF₆), ammonium hexafluorotitanate ((NH₄)₂TiF₆), and ammonium hexafluorozirconate ((NH₄)₂ZrF₆) were weighed by 25 g, 8.3 g, and 0.25 g, respectively, and then they were put in 1000 cc of pure water at 50°C and dissolved completely. Thereafter, 25 g of boron oxide was added to the solution and dissolved completely.

Separately, an acrylic plate of 100 mm×100 mm×1 mm in size was prepared, which plate had been applied with a multifunctional acrylic hard coating and the coated surface had been treated with NaOH aqueous solution.

The above-mentioned hard coated acrylic plate was dipped in the transparentized solution prepared as mentioned above for 8 hours. After being dipped, the acrylic plate was taken out from the aqueous solution, and slightly washed in pure water with the use of an ultrasonic cleaner.

The acrylic plate was heat treated by leaving to stand at 50 to 60°C in a drier for 3 hours. The average thickness of the obtained inorganic hydrophilic hard layer was 0.2 µm.

As a result, the adhesion of the inorganic hydrophilic hard layer formed on the surface of the hard coated acrylic plate was improved.

Further, a surfactant was applied on the acrylic plate on which this inorganic hydrophilic hard layer had been formed, and expanded thinly on the surface to make the surfactant impregnate into the inorganic hydrophilic hard layer.

When the thus obtained light transmissive plastic plate was breathed on, this light transmissive plastic plate was not clouded and its transparent state was maintained.

Goggles were formed by arranging frames on the peripheries of this light transmissive plastic plates.

Though this goggles were left to stand for 3 weeks, the antifogging property could be maintained. Moreover, when this goggles were used while being wiped with cloth, the antifogging property was slightly decreased, however, coating with a surfactant could again recover the initial antifogging property.

At this time, even if the surface was wiped with wire wool, no scratch was induced.

A window for a building could be manufactured by using aluminum sash as a frame and the window had also an excellent antifogging property as in Example 6 where goggles were formed by arranging frames on the peripheries of light transmissive plastic plates.

## Claims

1. An antifogging product comprising an inorganic hydrophilic hard layer containing an oxide of silicon, an oxide of titanium and an oxide of zirconium and having a great number of nano-size concave portions with an average depth of 10 nm to 10 µm from the surface, and being filled up with a surfactant in the concave portions so as to flow out continuously.

2. The antifogging product according to claim 1, wherein said nano-size concave portions are formed on a transparent hydrophilic part that is comprised of an inorganic hydrophilic substance and is formed on the surface of a light transmissive base material, and the average depth of said concave portions is 10 nm to 10 µm and the average spacing between adjacent concave portions is 5 nm or more.

3. The antifogging product according to claim 1, wherein the refractive index of said surfactant is in the range of 1.0 to 2.5.

4. The antifogging product according to claim 1, wherein said nano-size concave portions are formed on the transparent hydrophilic parts formed on both sides of a light transmissive base material.

5. The antifogging product according to claim 1, wherein said nano-size concave portions are formed on the transparent hydrophilic part formed on one side of a light transmissive base material.

6. The antifogging product according to claim 5, wherein a light reflection layer is formed on the surface opposite to the surface of said light transmissive base material on which nano-size concave portions are formed.

7. The antifogging product according to claim 1, wherein said inorganic hydrophilic hard layer is deposited by capturing at least part of fluorine atoms in a plurality of fluorometallic acid salts.

8. The antifogging product according to claim 1, wherein said inorganic hydrophilic hard layer further comprises an oxide of tin, niobium and/or tantalum.

9. The antifogging product according to claim 1, wherein the inorganic hydrophilic hard layer formed by the use of a plurality of hexafluorometallic acid salts contains at least one kind of atom selected from the group consisting of F, N, B, H and O, together with Si, Ti and Zr atoms.

10. The antifogging product according to claim 1, wherein said inorganic hydrophilic hard layer is formed by a LDP method or a vacuum deposition method.

11. The antifogging product according to claim 1, wherein said surfactant is impregnated in said inorganic hydrophilic hard layer.

12. The antifogging product according to claim 1, wherein said surfactant contains at least one surfactant selected from the group consisting of alkylether sulfate ester salt, polyoxyethylene alkylether, fatty acid alkanoladmide, fatty acid methylglucamide, α-olefin sulfonate, alkylamine oxide, and linear alkylbenzene sulfonate.

13. The antifogging product according to claim 1, wherein said surfactant is impregnated in an amount of 50% by weight or less in the inorganic hydrophilic hard layer.

14. An eye-glass lens formed by an antifogging product according to any of claims 1 to 13.

15. The eye-glass lens according to claim 14, wherein the contact angle between said inorganic hydrophilic hard layer and water is in the range of 0 to 50°.

16. The eye-glass lens according to claim 15, wherein Mohs' hardness of said inorganic hydrophilic hard layer is in the range of 5 to 9.

17. A method for producing a lens comprising forming an inorganic hydrophilic hard layer containing titanium dioxide and a photocatalyst inhibiting component for the photocatalyst action of the titanium dioxide on the surface of a lens having a hard layer, said photocatalyst inhibiting component comprising an oxide of silicon and an oxide of zirconium and said inorganic hydrophilic hard layer having a great number of nano-size concave portions with an average depth of 10 nm to 10 µm from the surface, and being filled up with a surfactant in the concave portions so as to flow out continuously, and softly polishing the surface of the lens forming the inorganic hydrophilic hard layer to uniformalize the lens surface.

18. The method of manufacturing a lens according to claim 17, wherein the soft polishing of the lens surface is carried out in the presence of a surfactant.

19. The method of manufacturing a lens according to claim 18, wherein the soft polishing of the lens surface is carried out using at least one abrasive selected from the group consisting of cloth, paper, nonwoven fabrics, other organic materials and leather, and in the presence of a hydrophilic polishing medium.

20. Use of an aqueous solution for forming an inorganic hydrophilic hard layer as defined in any of claims 1 to 13. which contains a plurality of fluorometallic acid salts forming said inorganic hydrophilic hard layer, said fluorometallic acid salts comprising silicon, titanium and zirconium atoms.

21. The use according to claim 20, wherein said fluorometallic acid salt is a salt prepared by dissolving corresponding metal oxide in hydrofluoric acid and then neutralizing the solution.

22. The use according to claim 20 or 21 wherein said plurality of fluorometallic acid salts contains ammonium hexafluorosilicate, ammonium hexafluorozirconate and ammonium hexafluorotitanate.

23. The use according to claim 20 or 21 wherein said plurality of fluorometallic acid salts further comprises ammonium hexafluoro-stannate, ammonium hexafluoroniobate and/or ammonium heptaflurorotantalate.

24. The use according to claim 20 or 21 wherein said fluorometallic acid salts comprise ammonium hexafluorosilicate, ammonium hexafluorozirconate and ammonium hexaflurorotitanate, and contain less than 40 atomic percent of titanium and 60 atomic percent or more of total of silicon and zirconium, based on 100 atomic percent of titanium, silicon and zirconium.

25. The use according to claim 20 or 21, such that an inorganic hydrophilic hard layer containing less than 60 atomic percent of titanium and 40 atomic percent or more of total of silicon and zirconium, based on 100 atomic percent of titanium, silicon and zirconium is formed.

26. The use according to claim 20 or 21, wherein said ammonium hexafluorosilicate, ammonium hexafluorozirconate and ammonium hexafluorotitanate are mixed so as to deposit in an atomic percent ration (Si/(Ti+Zr)) of Si to (Ti+Zr) of 99.9/0.1 to 40/60.

27. The use according to claim 20 or 21, wherein said plurality of hexafluorometallic acid salts is dissolved in water media.

28. The use according to claim 20, for forming an inorganic hydrophilic hard layer on the surface of a lens.

## Patentansprüche

1. Antibeschlagprodukt, das eine anorganische hydrophile Hartschicht umfasst, die ein Siliziumoxid, Titanoxid und Zirkoniumoxid enthält und eine große Anzahl konkaver Anteile im Nanogrößenbereich mit einer durchschnittlichen Tiefe von 10 nm bis 10 µm von der Oberfläche aus hat, und die konkaven Anteilen mit einem oberflächenaktiven Stoff aufgefüllt sind, um einen kontinuierlichen Übergang zu bilden.

2. Antibeschlagprodukt nach Anspruch 1, worin die besagten konkaven Anteile im Nanogrößenbereich auf einem transparenten hydrophilen Teil gebildet werden, das aus einer anorganischen hydrophilen Substanz besteht und auf der Oberfläche eines lichtdurchlässigen Basismaterials gebildet wird, und die durchschnittliche Tiefe der besagten konkaven Anteile 10 nm bis 10 µm ist und der durchschnittliche Abstand zwischen benachbarten konkaven Anteilen 5 nm oder mehr ist.

3. Antibeschlagprodukt nach Anspruch 1, worin der Brechungsindex des besagten oberflächenaktiven Stoffs in dem Bereich von 1,0 bis 2,5 ist.

4. Antibeschlagprodukt nach Anspruch 1, worin die besagten Anteile im Nanogrößenbereich auf den transparenten hydrophilen Teilen gebildet werden, die auf beiden Seiten eines lichtdurchlässigen Basismaterials gebildet werden.

5. Antibeschlagprodukt nach Anspruch 1, worin die besagten Anteile im Nanogrößenbereich auf dem transparenten hydrophilen Teil gebildet werden, das auf einer Seite eines lichtdurchlässigen Basismaterials gebildet wird.

6. Antibeschlagprodukt nach Anspruch 5, worin eine Lichtreflexionsschicht auf der Oberfläche entgegengesetzt zu der Oberfläche von dem besagten lichtdurchlässigen Basismaterial gebildet wird, auf welchem die Anteile im Nanogrößenbereich gebildet werden.

7. Antibeschlagprodukt nach Anspruch 1, worin die besagte anorganische hydrophile Hartschicht abgelagert wird, indem wenigstens ein Teil der Fluoratome in einer Vielzahl von Metallfluorsäuresalzen eingefangen wird.

8. Antibeschlagprodukt nach Anspruch 1, worin die besagte anorganische hydrophile Hartschicht ferner ein Zinn-, Niob- oder Tantaloxid umfasst.

9. Antibeschlagprodukt nach Anspruch 1, worin die anorganische hydrophile Hartschicht, die durch die Verwendung eine Vielzahl von Metallhexafluorsäuresalzen gebildet wird, wenigstens ein Atom enthält, das aus der Gruppe ausgewählt ist, bestehend aus F, N, B, H und O, zusammen mit Si-, Ti- oder Zr-Atomen.

10. Antibeschlagprodukt nach Anspruch 1, worin die besagte anorganische hydrophile Hartschicht durch ein LDP-Verfahren oder ein Vakuumdepositionsverfahren gebildet wird.

11. Antibeschlagprodukt nach Anspruch 1, worin der besagte oberflächenaktive Stoff in die besagte anorganische hydrophile Hartschicht imprägniert wird.

12. Antibeschlagprodukt nach Anspruch 1, worin der besagte oberflächenaktive Stoff wenigstens einen oberflächenaktiven Stoff ausgewählt aus der Gruppe enthält, bestehend aus einem Alkylethersulfatestersalz, Polyoxyethylenalkylether, Fettsäurealkanolamid, Fettsäuremethylglucamid, α-Olefinsulfonat, Alkylaminoxid und einem linearem Alkylbenzensulfonat.

13. Antibeschlagprodukt nach Anspruch 1, worin der besagte oberflächenaktive Stoff mit einer Menge von 50 Gew.-% oder weniger in die anorganische hydrophile Hartschicht imprägniert wird.

14. Augenglaslinse, die durch ein Antibeschlagprodukt nach einem der Ansprüche 1 bis 13 gebildet wird.

15. Augenglaslinse nach Anspruch 14, worin der Berührungswinkel zwischen der besagten anorganischen hydrophilen Hartschicht und Wasser in dem Bereich von 0 bis 50 ° ist.

16. Augenglaslinse nach Anspruch 15, worin die Mohshärte der besagten anorganischen hydrophilen Hartschicht in dem Bereich von 5 bis 9 ist.

17. Verfahren zur Herstellung einer Linse, umfassend die Bildung einer anorganischen hydrophilen Hartschicht, die Titandioxid und einen Photokatalysator-hemmenden Bestandteil gegen die photokatalytische Wirkung des Titandioxids auf der Oberfläche einer Linse, die eine Hartschicht hat, enthält, wobei der besagte Photokatalysator-hemmende Bestandteil ein Silikonoxid und ein Zirkoniumoxid umfasst, und die besagte anorganische hydrophile Hartschicht eine große Anzahl von konkaven Anteilen im Nanogrößenbereich mit einer durchschnittlichen Tiefe von 10 nm bis 10 µm von der Oberfläche aus hat, und die konkaven Anteilen mit einem oberflächenaktiven Stoff aufgefüllt sind, um so um einen kontinuierlichen Übergang zu bilden, und das sanfte Polieren der Linsenoberfläche, die die anorganische hydrophile Hartschicht bildet, um die Linsenoberfläche gleichmäßig zu gestalten.

18. Verfahren zur Herstellung einer Linse nach Anspruch 17, worin das sanfte Polieren der Linsenoberfläche in der Anwesenheit eines Oberflächenaktiven Stoff durchgeführt wird.

19. Verfahren zur Herstellung einer Linse nach Anspruch 17, worin das sanfte Polieren der Linsenoberfläche durch die Verwendung von wenigstens einem Poliermittel, welches ausgewählt ist aus der Gruppe, bestehend aus Gewebe, Papier, Vliestextilwaren, anderen organischen Materialien und Leder, und in der Anwesenheit von einem hydrophilem Poliermedium durchgeführt wird.

20. Verwendung einer wässerigen Lösung zur Bildung einer anorganischen hydrophilen Hartschicht wie in einem der Ansprüche 1 bis 13 definiert, welche eine Vielzahl von Metallfluorsäuresalzen enthält, welche die besagte anorganische hydrophile Hartschicht bilden, wobei die besagten Metallfluorsäuresalze Silizium-, Titan- und Zirkoniumatome umfassen.

21. Verwendung nach Anspruch 20, worin das besagte Metallfluorsäuresalz ein Salz ist, das durch das Lösen des entsprechenden Metalloxids in Fluorwasserstoffsäure und dann durch das Neutralisieren der Lösung hergestellt wird.

22. Verwendung nach Anspruch 20 oder 21, worin die besagte Vielzahl an Metallfluorsäuresalzen Ammoniumhexafluorsilikat, Ammoniumhexafluorzirconat und Ammoniumhexafluortitanat enthält.

23. Verwendung nach Anspruch 20 oder 21, worin die besagte Vielzahl an Metallfluorsäuresalzen ferner Ammoniumhexafluorstannat, Ammoniumhexafluorniobat und Ammoniumheptafluortantalat umfasst.

24. Verwendung nach Anspruch 20 oder 21, worin die besagten Metallfluorsäuresalze Ammoniumhexafluorsilikat, Ammoniumhexafluorzirconat und Ammoniumhexafluortitanat umfassen und weniger als 40 Atomprozent Titan und 60 Atomprozent oder mehr Gesamtsilizium und -zirkonium enthalten, basierend auf 100 Atomprozent Titan, Silizium und Zirkonium.

25. Verwendung nach Anspruch 20 oder 21, so dass eine anorganische hydrophile Hartschicht gebildet wird, die weniger als 60 Atomprozent Titan und 40 Atomprozent oder mehr Gesamtsilizium und -zirkonium enthält, basierend auf 100 Atomprozent Titan, Silizium und Zirkonium.

26. Verwendung nach Anspruch 20 oder 21, worin das besagte Ammoniumhexafluorsilikat, Ammoniumhexafluorzirconat und Ammoniumhexafluortitanat gemischt sind, so dass ein Atomprozentverhältnis (Si / (Ti + Zr)) von Si zu (Ti + Zr) von 99,9/0,1 bis 40/60 abgelagert wird.

27. Verwendung nach Anspruch 20 oder 21, worin die besagte Vielzahl von Metallhexafluorsäuresalz in wässerigen Medien gelöst wird.

28. Verwendung nach Anspruch 20 zur Bildung einer anorganischen hydrophilen Hartschicht auf der Oberfläche einer Linse.

## Revendications

1. Produit anti-buée comprenant une couche dure hydrophile inorganique contenant un oxyde de silicium, un oxyde de titane et un oxyde de zirconium et ayant un grand nombre de parties concaves de la taille du nanomètre ayant une profondeur moyenne de 10 nm à 10 µm depuis la surface, et qui est remplie d'un agent tensioactif dans les parties concaves de manière à s'écouler en continu.

2. Produit anti-buée selon la revendication 1, dans lequel lesdites parties concaves de la taille du nanomètre sont formées sur une partie hydrophile transparente qui est constituée d'une substance hydrophile inorganique et est formée sur la surface d'un matériau de base transmettant la lumière, et la profondeur moyenne desdites parties concaves est de 10 nm à 10 µm et l'espacement moyen entre les parties concaves adjacentes est de 5 nm ou plus.

3. Produit anti-buée selon la revendication 1, dans lequel l'indice de réfraction dudit agent tensioactif est dans la gamme de 1,0 à 2,5.

4. Produit anti-buée selon la revendication 1, dans lequel lesdites parties concaves de la taille du nanomètre sont formées sur les parties hydrophiles transparentes formées sur les deux côtés d'un matériau de base transmettant la lumière.

5. Produit anti-buée selon la revendication 1, dans lequel lesdites parties concaves de la taille du nanomètre sont formées sur la partie hydrophile transparente formée sur un côté d'un matériau de base transmettant la lumière.

6. Produit anti-buée selon la revendication 5, dans lequel une couche réfléchissant la lumière est formée sur la surface opposée à la surface dudit matériau de base transmettant la lumière sur lequel des parties concaves de la taille du nanomètre sont formées.

7. Produit anti-buée selon la revendication 1, dans lequel ladite couche dure hydrophile inorganique est déposée en capturant au moins une partie des atomes de fluor dans une pluralité de sels d'acide fluorométallique.

8. Produit anti-buée selon la revendication 1, dans lequel ladite couche dure hydrophile inorganique comprend en outre un oxyde d'étain, de niobium et/ou de tantale.

9. Produit anti-buée selon la revendication 1, dans lequel ladite couche dure hydrophile inorganique formée par l'utilisation d'une pluralité de sels d'acide hexafluorométallique contient au moins un type d'atome choisi dans le groupe constitué par F, N, B, H et O, conjointement avec les atomes Si, Ti et Zr.

10. Produit anti-buée selon la revendication 1, dans lequel ladite couche dure hydrophile inorganique est formée par un procédé LDP ou un procédé de dépôt sous vide.

11. Produit anti-buée selon la revendication 1, dans lequel ledit agent tensioactif est imprégné dans ladite couche dure hydrophile inorganique.

12. Produit anti-buée selon la revendication 1, dans lequel ledit agent tensioactif contient au moins un agent tensioactif choisi dans le groupe constitué par un sel d'ester alkyléthersulfate, un alkgléther de polyoxyéthylène, un alcanolamide d'acide gras, un méthylglucamide d'acide gras, un sulfonate d'α-oléfine, un oxyde d'alkylamine et un sulfonate d'alkylbenzène linéaire.

13. Produit anti-buée selon la revendication 1, dans lequel ledit agent tensioactif est imprégné en une quantité de 50 % en poids ou moins dans la couche dure hydrophile inorganique.

14. Lentille de contact formée par un produit anti-buée selon l'une quelconque des revendications 1 à 13.

15. Lentille de contact selon la revendication 14, dans laquelle l'angle de contact entre ladite couche dure hydrophile inorganique et l'eau est dans la gamme de 0 à 50°.

16. Lentille de contact selon la revendication 15, dans laquelle la dureté de Moh de ladite couche dure hydrophile inorganique est dans la gamme de 5 à 9.

17. Procédé de production d'une lentille comprenant la formation d'une couche dure hydrophile inorganique contenant du dioxyde de titane et un composant inhibant un photocatalyseur pour l'action photocatalytique du dioxyde de titane sur la surface d'une lentille ayant une couche dure, ledit composant inhibant un photocatalyseur comprenant un oxyde de silicium et un oxyde de zirconium et ladite couche dure hydrophile inorganique ayant un grand nombre de partiesconcaves de la taille du nanomètre ayant une profondeur moyenne de 10 nm à 10 µm depuis la surface, et qui est remplie d'un agent tensioactif dans les parties concaves de manière à s'écouler en continu, et le polissage doux de la surface de la lentille formant la couche dure hydrophile inorganique pour uniformiser la surface de lentille.

18. Procédé de fabrication d'une lentille selon la revendication 17, dans lequel le polissage doux de la surface de lentille est réalisé en présence d'un agent tensioactif.

19. Procédé de fabrication d'une lentille selon la revendication 18, dans lequel le polissage doux de la surface de lentille est réalisé en utilisant au moins un abrasif choisi dans le groupe constitué par un tissu, un papier, une étoffe non tissée, d'autres matériaux organiques et du cuir, et en présence d'un milieu de polissage hydrophile.

20. Utilisation d'une solution aqueuse pour former une couche dure hydrophile inorganique comme défini selon l'une quelconque des revendications 1 à 13, qui contient une pluralité de sels d'acide fluorométallique formant ladite couche dure hydrophile inorganique, lesdits sels d'acide fluorométallique comprenant les atomes de silicium, de titane et de zirconium.

21. Utilisation selon la revendication 20, dans laquelle ledit sel d'acide fluorométallique est un sel préparé en dissolvant un oxyde de métal correspondant dans l'acide fluorhydrique puis en neutralisant la solution.

22. Utilisation selon la revendication 20 ou 21, dans laquelle ladite pluralité de sels d'acide fluorométallique contient de l'hexafluorosilicate d'ammonium, de l'hexafluorozirconate d'ammonium et de l'hexafluorotitanate d'ammonium.

23. Utilisation selon la revendication 20 ou 21, dans laquelle ladite pluralité de sels d'acide fluorométallique comprend en outre l'hexafluorostannate d'ammonium, l'hexafluoroniobate d'ammonium et/ou l'heptafluorotantalate d'ammonium.

24. Utilisation selon la revendication 20 ou 21, dans laquelle lesdits sels d'acide fluorométallique comprennent l'hexafluorosilicate d'ammonium, l'hexafluorozirconate d'ammonium et l'hexafluorotitanate d'ammonium et contiennent moins de 40 pour cent atomique de titane et 60 pour cent atomique ou plus du total de silicium et de zirconium, sur la base de 100 pour cent atomique de titane, de silicium et de zirconium.

25. Utilisation selon la revendication 20 ou 21, de telle sorte qu'une couche dure hydrophile inorganique contenant moins de 60 pour cent atomique de titane et 40 pour cent atomique ou plus du total de silicium et de zirconium, sur la base de 100 pour cent atomique de titane, de silicium et de zirconium est formée.

26. Utilisation selon la revendication 20 ou 21, dans laquelle ledit hexafluorosilicate d'ammonium, ledit hexafluorozirconate d'ammonium et ledit hexafluorotitanate d'ammonium sont mélangés de manière à être déposés en un rapport de pourcentage atomique (Si/(Ti + Zr)) de Si sur (Ti + Zr) de 99,9/0,1 à 40/60.

27. Utilisation selon la revendication 20 ou 21, dans laquelle ladite pluralité de sels d'acide hexafluorométallique est dissoute dans des milieux aqueux.

28. Utilisation selon la revendication 20, destinée à former une couche dure hydrophile inorganique sur la surface d'une lentille.
